# EUROPEAN PATENT APPLICATION

(11) **EP 2 108 922 A1**
(43) Date of publication of application: **14.10.2009**
(21) Application number: 08702865.0
(22) Date of filing: 04.02.2008
(51) Int. Cl.: G01C 19/56, G01P 9/04, H01L 41/08

(54) **ANGULAR VELOCITY SENSOR**

(30) Priority: 05.02.2007 JP 2007025013
(71) Applicant: Panasonic Corporation, Kadoma-shi Osaka 571-8501 (JP)
(72) Inventor: UEMURA, Takeshi, Osaka-shi, Osaka 540-6207 (JP)
(74) Representative: Kügele, Bernhard
(86) International application number: PCT/JP2008/000133
(87) International publication number: WO 2008/096528

(57) **Abstract**

There is provided a signal separation circuit of an angular velocity sensor where a first sensing section, a second sensing section and a third sensing section which are arranged in two second arms are connected to a detection circuit section, and in this detection circuit section, an angular velocity is detected based upon angular velocity signals outputted from the first to third sensing electrode sections.

A configuration is formed where angular velocity signals include an X component signal around an X axis, a Y component signal around a Y axis, a Z component signal around a Z axis and an oscillating component signal of a flexible body in the mutually orthogonal X axis, Y axis and Z axis, and the detection circuit section is provided with a separation circuit that separates these X component signal, Y component signal, Z component signal and oscillating component signal.

## Description

### TECHNICAL FIELD

The present invention relates to an angular velocity sensor that detects an angular velocity for use in a variety of electronic devices for postural control and navigation of moving bodies such as aircraft, automobiles, robots, ships, and vehicles.

### BACKGROUND ART

In the following, a conventional angular velocity sensor is described. The conventional angular velocity sensor generally oscillates a detection element in a variety of shapes, such as tuning-fork shape, H-shape or T-shape, and electrically detects distortion of the detection element accompanied by generation of Coriolis force. In that case, in an X axis, a Y axis and a Z axis which are substantially orthogonal to one another, when a vehicle is arranged on an XY plane of the X axis and the Y axis, an angular velocity sensor for a navigation device needs to detect an angular velocities around the X axis and around the Z axis of the vehicle. Conventionally, in the case of detecting angular velocities of a plurality of detection axes (X axis, Y axis, Z axis), a plurality of angular velocity sensors have been used to correspond to the number of detection axes. Further, for detecting an angular velocity around the Z axis, a detection element has been used as erectingly provided with respect to the XY plane. As for prior art document information related to an invention of this application, for example, Patent Document 1 is known.

However, in the above configuration, there has been a problem that in the case of detecting angular velocities of a plurality of detection axes, it is necessary to ensure a mounting area for mounting a plurality of detection elements and a plurality of angular velocity sensors on a mounting substrate correspondingly to the respective detection axes, and reduction in size of a variety of electronic devices cannot be sought.
[Patent Document 1] Unexamined Japanese Patent Publication No. 2001-208546

### DISCLOSURE OF THE INVENTION

The present invention has: a detection element, which has a sensing section arranged in a flexible body and sensing distortion of the flexible body; and a detection circuit section, which detects an angular velocity relating to the detection element. The sensing section has a sensing electrode section made up of an upper electrode and a lower electrode with a piezoelectric body interposed therebetween. The detection circuit section detects an angular velocity based upon angular velocity signals outputted from the sensing electrode section in accordance with the angular velocity. It is configured such that the angular velocity signals include an X component signal around the X axis and a Z component signal around the Z axis in mutually orthogonal X axis, Y axis and Z axis, and the detection circuit section is provided with a separation circuit that separates the X component signal and the Z component signal.

With this configuration, since the angular velocity signals include the X component signal around the X axis and the Z component signal around the Z axis in mutually orthogonal X axis, Y axis and Z axis, and the detection circuit section is provided with the separation circuit that separates the X component signal and the Z component signal, angular velocities around a plurality of detection axes can be detected in one detection element. Therefore, in the case of detecting angular velocities of the plurality of detection axes, a mounting area for mounting a plurality of detection elements and a plurality of angular velocity sensors is not needed ensuring, but a mounting area for mounting only one detection element may be ensured, and hence it is possible to seek reduction in size of a variety of electronic devices.

### BRIEF DESCRIPTION OF THE DRAWINGS

FIG. 1 is a perspective view of a detection element of an angular velocity sensor according to an embodiment of the present invention;
FIG. 2 is a schematic sectional view along A-A of FIG. 1; and
FIG. 3 is a view of an operational condition of a detection element.

### REFERENCE MARKS IN THE DRAWINGS

- 1: Detection element
- 2: First arm
- 4: Second arm
- 6: Supporting section
- 8: Frame body
- 11: Weight section
- 12: Groove section
- 13: Piezoelectric body
- 14: Lower electrode
- 15: Upper electrode
- 17: Driving section
- 17a: First driving electrode section
- 17b: First driving electrode section
- 19: First sensing section
- 19a: First sensing electrode section
- 19b: First sensing electrode section
- 20: Second sensing section
- 20a: Second sensing electrode section
- 20b: Second sensing electrode section
- 21: Third sensing section
- 21a: Third sensing electrode section
- 21b: Third sensing electrode section

### PREFERRED EMBODIMENTS FOR CARRYING OUT OF THE INVENTION

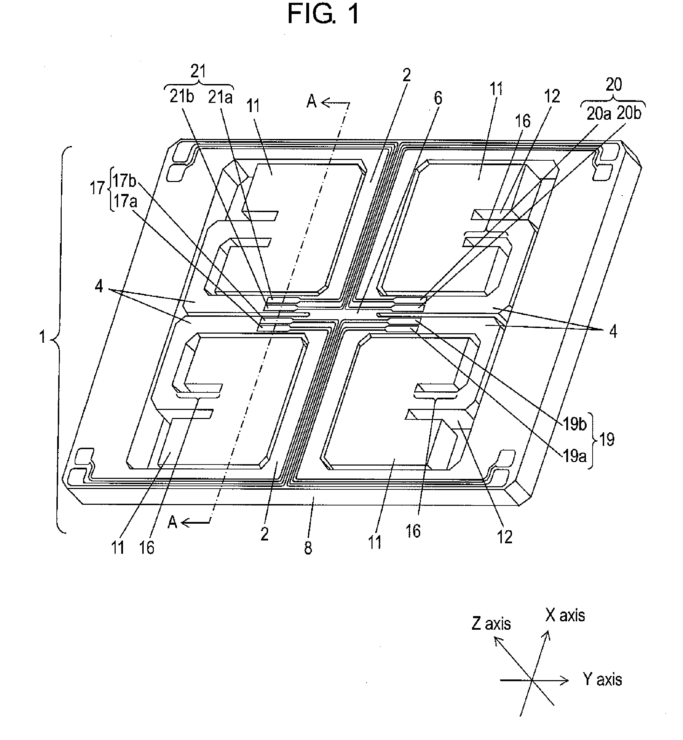

FIG. 1 is a perspective view of a detection element of an angular velocity sensor in an embodiment of the present invention. In FIG. 1, the angular velocity sensor according to an embodiment of the present invention has detection element 1 that detects an angular velocity, and its base is made of a platy flexible body. Detection element 1 has two orthogonal arms each formed by coupling first arm 2 to second arm 4 in a substantially orthogonal direction. One end of the two first arms 2 are supported by supporting section 6, and the other ends of the two first arms 2 are coupled to frame body 8, and the arms are fixed to a mounting substrate (not shown) with this frame body 8. Further, second arm 4 is bent into a U-shape to provide opposing sections 16 opposed to second arm 4 itself, and weight section 11 is coupled to the end of the opposing section 16. This weight section 11 is provided with groove section 12, and the end portion of second arm 4 is coupled to groove section 12.

In this detection element 1, first arm 2 and supporting section 6 are arranged on substantially the same straight line, and when the space is defined by a Z axis vertical to the surface of detection element 1, and an X axis and a Y axis that are orthogonal to the Z axis and orthogonal to each other, in the case of arranging first arm 2 in the X-axis direction, second arm 4 is arranged in the Y axis direction.

Further, driving section 17 that drives and oscillates weight section 11 is provided on the surface of any one of second arm out of four second arms 4, and on the surfaces of the other second arms 4, first sensing section 19, second sensing section 20 and third sensing section 21 which sense distortion of second arms 4 are provided.

Driving section 17 has electrode sections sandwiching, from above and below, piezoelectric body (not shown) for driving weight section 11 of second arm 4. First driving electrode section 17a is arranged on the internal peripheral section of any one of second arms 4, and first driving electrode section 17b is also arranged on the outer peripheral side thereof. Further, first driving electrode sections 17a, 17b are arranged as opposed to each other.

First sensing section 19, second sensing section 20 and third sensing section 21 are electrode sections respectively sandwiching, from above and below, piezoelectric bodies 13 (not shown) for sensing distortion of second arms 4. In the three second arms 4, on the inner peripheral section sides thereof, first sensing electrode section 19a, second sensing electrode section 20a and third sensing electrode section 21a are respectively arranged, and also on the outer peripheral section sides, first sensing electrode section 19b, second sensing electrode section 20b and third sensing electrode section 21b are respectively arranged. Further, first sensing electrode sections 19a, 19b are arranged as opposed to each other, second sensing electrode sections 20a, 20b are arranged as opposed to each other, third sensing electrode sections 20a, 20b are arranged as opposed to each other.

The electrode sections sandwiching the piezoelectric body (not shown) from above and below are made up of lower electrode 14 and upper electrode 15. Signal lines are drawn respectively from lower electrodes 14 and upper electrodes 15 of first driving electrode sections 17a, 17b, and lower electrodes 14 and upper electrodes 15 of first to third sensing electrode sections 19a, 19b, 20a, 20b, 21a, 21b.

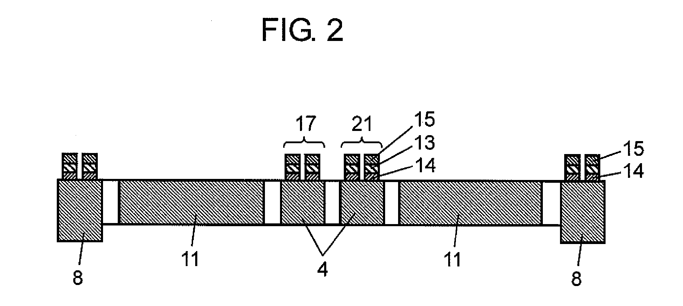

FIG. 2 is a schematic sectional view along A-A of FIG.1. As shown in FIG. 2, the signal lines drawn from first driving electrode sections 17a, 17b, first to third sensing electrode sections 19a, 19b, 20a, 20b, 21a, 21b, and the respective electrode sections may each be formed by forming lower electrode 14 made of Pt on second arm 4 made up of a silicon substrate by high-frequency sputtering, forming piezoelectric body 13 made of PZT on top of this lower electrode 14 by high-frequency sputtering, and vapor depositing upper electrode 15 made of Au on top of piezoelectric body 13 made of PZT.

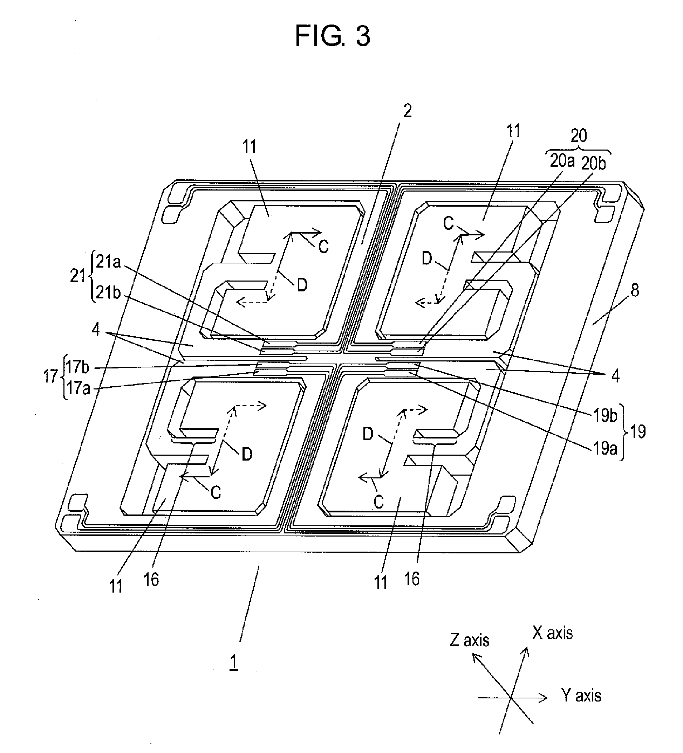

FIG. 3 is an operational state view of detection element 1. A case is considered where the space is defined by a Z axis vertical to the surface of detection element 1, and an X axis and a Y axis that are orthogonal to the Z axis and orthogonal to each other, first arm 2 of detection element 1 is arranged in the X-axis direction, and second arm 4 is arranged in the Y axis direction. When an alternating voltage of a resonance frequency is applied to first driving electrode sections 17a, 17b, second arm 4 is driven and oscillated starting from second arm 4 where driving section 17 is arranged, based upon which weight section 11 is also driven and oscillated in a direction opposed to second arm 4 (driving and oscillating direction D indicated by a solid-line arrow and a dotted-line arrow). Further, all of the four second arms 4 and the four weight sections 11 are synchronously driven and oscillated in the direction opposed to second arm 4. This driving and oscillating direction in detection element 1 becomes the X axis direction.

At this time, for example when an angular velocity occurs counterclockwise around the Z axis, Coriolis force is generated on weight section 11 in a direction orthogonal to the driving and oscillating direction (Coriolis direction C indicated by a solid-line arrow and a dotted-line arrow) synchronously with the driving and oscillation of weight section 11, and hence distortion can be generated due to the angular velocity counterclockwise around the Z axis of second arm 4. This Coriolis direction in detection element 1 becomes the Y axis direction.

When the Coriolis force is generated in the Coriolis direction C indicated by the solid arrow, in second arms 4 provided with first to third sensing electrode sections 19a, 19b, 20a, 20b, 21a, 21b, first sensing electrode section 19a, second sensing electrode section 20b and third sensing electrode section 21a sense shrinkage of second arms 4. Simultaneously, first sensing electrode section 19b, second sensing electrode section 20a and third sensing electrode section 21b sense extension of second arms 4. When the Coriolis force is generated in the Coriolis direction indicated by the dotted-line arrow, extension and shrinkage in a direction opposite thereto are sensed. In accordance with the sensed extension and shrinkage, angular velocity signals are outputted from first to third sensing electrode sections 19a, 19b, 20a, 20b, 21a, 21b, to detect the angular velocity.

Meanwhile, on the contrary to the above, in the case of occurrence of an angular velocity clockwise around the Z axis, second arm 4 is extended and shrunk in a direction directly opposite to the case of occurrence of an angular velocity counterclockwise around the Z axis, and first to third sensing electrode sections 19a, 19b, 20a, 20b, 21a, 21b sense this extension and shrinkage, to detect the angular velocity.

Further, also in the case of occurrence of an angular velocity around the X axis or the Y axis, the Coriolis force is generated on weight section 11 in a direction orthogonal to the driving and oscillating direction synchronously with the driving and oscillation of weight section 11, and hence distortion is generated due to the angular velocity around the Y axis of second arm 4, and first to third sensing electrode sections 19a, 19b, 20a, 20b, 21a, 21b sense extension and shrinkage of second arms 4, to detect the angular velocity.

Next, angular velocity detection processing of the angular velocity sensor is described. First sensing section 19, second sensing section 20 and third sensing section 21 arranged in second arms 4 are connected to a detection circuit section, and in this detection circuit section, an angular velocity is detected based upon angular velocity signals outputted from lower electrodes 14 and upper electrodes 15 of first to third sensing electrode sections 19a, 19b, 20a, 20b, 21a, 21b. The angular velocity signals include an X component signal around the X axis, a Y component signal around the Y axis, a Z component signal around the Z axis and an oscillating component signal of a flexible body in the mutually orthogonal X axis, Y axis and Z axis. The detection circuit section is provided with a separation circuit that separates these X component signal, Y component signal, Z component signal and the oscillating component signal.

Since first to third sensing electrode sections 19a, 19b, 20a, 20b, 21a, 21b have almost the same area, absolute values of the X component signal, the Y component signal, the Z component signal and the oscillating component signal which are detected in the respective electrodes are equivalent to one another. Hence in the separation circuit, the signals can be increased or offset by adding or subtracting outputs of the respective electrodes. A signal values obtained by this addition or subtraction is referred to as a sum/difference signal value. This enables separation of each component signal. Further, as shown in FIG. 1, with third sensing electrode sections 19a and 20a being located symmetrically about a plane vertical to the X axis, the offset is facilitated. This also applies to the relationship between third sensing electrode sections 19b and 20b. Moreover, with third sensing electrode section 20a and third sensing electrode section 21a being located symmetrically about a plane vertical to the Y axis, the offset is facilitated. This also applies to the relationship between third sensing electrode section 20b and third sensing electrode section 21b. Furthermore, with third sensing electrode section 19a and third sensing electrode section 19b being arrayed in pairs, the offset is facilitated. This also applies to third sensing electrode section 20a and third sensing electrode section 20b. This also applies to third sensing electrode section 21a and third sensing electrode section 21b. On the whole, as shown in FIG. 1, in detection element 1, the shapes of weight sections 11 and the like are symmetrical about supporting section 6 being the central position of detection element 1 taken as the center, thereby facilitating offset of a variety of output signals.

The X component signal is detected based upon a sum/difference signal value of the X component signal in a combination of a sum/difference signal value of the X component signal being not 0 and a sum/difference signal value of the Y component signal, a sum/difference signal value of the Z component signal and a sum/difference signal value of the oscillating component signal being 0 in first to third sensing electrode sections 19a, 19b, 20a, 20b, 21a, 21b. The Y component signal is detected based upon a sum/difference signal value of the Y component signal in a combination of a sum/difference signal value of the Y component signal being not 0 and a sum/difference signal value of the X component signal, a sum/difference signal value of the Z component signal and a sum/difference signal value of the oscillating component signal being 0 in first to third sensing electrode sections 19a, 19b, 20a, 20b, 21a, 21b. The Z component signal is detected based upon a sum/difference signal value of the Z component signal in a combination of a sum/difference signal value of the Z component signal being not 0 and a sum/difference signal value of the X component signal, a sum/difference signal value of the Y component signal and a sum/difference signal value of the oscillating component signal being 0 in first to third sensing electrode sections 19a, 19b, 20a, 20b, 21a, 21b. In such a manner, the X component signal, the Y component signal, the Z component signal and the oscillating component signal are separated.

In comparison of the X component signal, the Y component signal, the Z component signal and the oscillating component signal as the angular velocity signals, the oscillating component signal is typically much larger than the other signals. When X component signal, the Y component signal, the Z component signal and the oscillating component signal, which are outputted from first to third sensing electrode sections 19a, 19b, 20a, 20b, 21a, 21b arranged in detection element 1, are respectively referred to as an X value, Y value, Z value and D value, and for example, when assuming that the X value, the Y value and the Z value of the X component signal, the Y component signal and the Z component signal are "1" and the oscillating component signal is "10", the X value, the Y value, the Z value and the D value in the respective signal values captured as peak values at a certain moment are as shown in TABLE 1.

### [TABLE 1]

Results of the sum/difference signal values at this time are shown in TABLE 2.

### [TABLE 2]

In TABLE 2, "21b-21a" first in the table shows difference signals of an X value, a Y value, a Z value and a D value of third sensing electrode section 21b and an X value, a Y value, a Z value and a D value of third sensing electrode section 21a. The X value is "0", the Y value is "0", the Z value is "-2" and the D value is "-20". Second to thirtieth difference values are shown in the same manner.

When sum/difference signal values are calculated from these difference values and combinations satisfying the above condition in the separation circuit are extracted, results are as follows.

As for the X component signal, difference signal values (X value: "8", Y value: "0", Z value: "0", D value: "0") of fourth and ninth sum signal values (X value: "4", Y value: "0", Z value: "0", D value: "0") and seventeenth and twenty-first sum signal values (X value: "-4", Y value: "0", Z value: "0", D value: "0") are most suitable for the separation. In both the fourth and ninth values and the seventeenth and twenty-first values, the sum/difference signal value of the X component signal is not 0 and the sum/difference signal value of the Z component signal is 0. Further, in both values, the sum/difference signal value of the Y component signal is 0. Moreover, in both values, the sum/difference signal value of the oscillating component signal is 0. In this calculation, when the respective signal values up to the thirtieth signal value in TABLE 2 are regarded as first-stage sum/difference signal values, the fourth and ninth sum signal values can be referred to as second-stage sum/difference signal values in accordance with the process of that calculation. The seventeenth and twenty-first sum signal values can also be referred to as second-stage sum/difference signal value. Further, a value obtained by calculating a sum/difference of the four values of the fourth and ninth values and the seventeenth and twenty-first values can be referred to as a third-stage sum/difference signal value in accordance with the process of that calculation.

As for the Y component signal, difference signal values (X value: "0", Y value: "8", Z value: "0", D value: "0") of twelfth and thirteenth sum signal values (X value: "0", Y value: "-4", Z value: "0", D value: "0") and eighteenth and twenty-fourth sum signal values (X value: "0", Y value: "4", Z value: "0", D value: "0") are most suitable for the separation. In both the twelfth and thirteenth sum values and the eighteenth and twenty-fourth sum values, the sum/difference signal value of the Y component signal is not 0, and the sum/difference signal value of the X component signal and the sum/difference signal value of the Z component signal are 0. Further, in both values, the sum/difference signal value of the oscillating component signal is 0.

As for the Z component signal, difference signal values (X value: "0", Y value: "0", Z value: "8", D value: "0") of fourth and seventeenth sum signal values (X value: "0", Y value: "0", Z value: "4", D value: "0") and ninth and twenty-first sum signal values (X value: "0", Y value: "0", Z value: "-4", D value: "0") are most suitable for the separation. In both the fourth and seventeenth values and the ninth and twenty-first values, the sum/difference signal value of the X component signal is 0 and the sum/difference signal value of the Z component signal is not 0. Further, in both values, the sum/difference signal value of the Y component signal is 0. Moreover, in both values, the sum/difference signal value of the oscillating component signal is 0.

It is to be noted that, when the Z component signal is calculated using difference signal values (X value: "0", Y value: "0", Z value: "8", D value: "0") of the thirteenth and eighteenth sum signal values (X value: "0", Y value: "0", Z value: "4", D value: "0") and the twelfth and twenty-fourth sum signal values (X value: "0", Y value: "0", Z value: "-4", D value: "0"), the X component signal and the Y component signal can be calculated in a combination not using third sensing electrode sections 21a, 21b. In other words, in TABLE 2, in combinations of tenth to fifteenth, eighteenth to twentieth, twenty-third, twenty-fourth, and twenty-seventh values, the X component signal, the Y component signal and the Z component signal can be calculated.

The angular velocity signals include the X component signal around the X axis, the Y component signal around the Y axis, the Z component signal around the Z axis and the oscillating component signal in the mutually orthogonal X axis, Y axis and Z axis, and the detection circuit section is provided with the separation circuit that is configured to perform signal separation in the above-mentioned suitable combinations so as to separate the X component signal, the Y component signal, the Z component signal and the oscillating component signal, whereby it is possible to detect an angular velocity around the plurality of detection axes in one detection element 1.

Accordingly, in the case of detecting an angular velocity of a plurality of detection axes, a mounting area for mounting a plurality of detection elements 1 and a plurality of angular velocity sensors is not needed ensuring, but a mounting area for mounting only one detection element 1 may be ensured, and hence it is possible to seek reduction in size of a variety of electronic devices.

In particular, since the oscillating component signal can be separated, the oscillating component signal having a much larger output signal level than those of the X component signal, the Y component signal and the Z component signal is offset and separated, and hence it is possible to remove the oscillating component signal apt to become a noise component, so as to improve detection accuracy.

It should be noted that in one embodiment of the present invention, the configuration was described where in the condition that the angular velocity signals include the X component signal around the X axis, the Y component signal around the Y axis, the Z component signal around the Z axis and the oscillating component signal in the mutually orthogonal X axis, Y axis and Z axis, the detection circuit section is provided with the separation circuit that separates the X component signal, the Y component signal, the Z component signal and the oscillating component signal, but a configuration may be formed where the oscillating component signal is not included and a separation circuit is provided which simply separates the X component signal, the Y component signal and the Z component signal.

Further, a configuration may be formed where the angular velocity signals do not include the Y component signal but include the X component signal around the X axis, the Z component signal around the Z axis and the oscillating component signal in the mutually orthogonal X axis, Y axis and Z axis, and a separation circuit is formed which separates the X component signal, the Z component signal and the oscillating component signal, or a configuration may be formed where the angular velocity signals do not include the oscillating component signal, and a separation circuit that separates the X component signal and the Z component signal is provided.

Further, since respective signal polarities of signals outputted from lower electrodes 14 and upper electrodes 15 of first to third sensing electrode sections 19a, 19b, 20a, 20b, 21a, 21b are reversed, it is also possible to take advantage of the reversal signal polarity in addition or subtraction at the time of separation of the respective component signals (X component signal, Y component signal, Z component signal, oscillating component signal).

Moreover, although the method of calculating a sum signal after calculation of difference signals in the above embodiment was shown in the above embodiment, the order may be reverse thereto. In other words, taking the previous example as an example, after calculation of both the sum signal value of the fourth and ninth values and the sum signal value of the seventeenth and twenty-first values, the difference signal values thereof were calculated. However, the order may be reversed, and after calculation of the fourth and the seventeenth difference signals and the ninth and the twenty-first difference signals, the sum signal thereof may be calculated.

Furthermore, although the fourth value is the difference signal of 21b and 20b and the ninth value is the difference signal of 21a and 20a as the previous stages and the sum signal is calculated from the both values, the order may be revered, and after previous calculation of both a sum signal of 21b and 21a and a sum signal of 20b and 20a, a difference signal of both values may be calculated. A variety of combinations can be considered in terms of the order of sum, difference, and sum.

In the above example, X, Y and Z may be replaced by one another.

### INDUSTRIAL APPLICABILITY

The angular velocity sensor according to the present invention is not required to ensure a mounting area for mounting a plurality of detection elements and a plurality of angular velocity sensors, and is thus applicable to a variety of small-sized electronic devices.

**TABLE 1**

| SIGNAL VALUE | X VALUE | Y VALUE | Z VALUE | D VALUE |
|---|---|---|---|---|
| 19a | -1 | -1 | 1 | -10 |
| 19b | -1 | -1 | -1 | 10 |
| 20a | -1 | 1 | 1 | 10 |
| 20b | -1 | 1 | -1 | -10 |
| 21a | 1 | 1 | -1 | 10 |
| 21b | 1 | 1 | 1 | -10 |

**TABLE 2**

| | SUM/DIFFERENCE SIGNAL VALUE | X VALUE | Y VALUE | Z VALUE | D VALUE |
|---|---|---|---|---|---|
| FIRST | 21b-21a | 0 | 0 | 2 | -20 |
| SECOND | 21b-19b | 2 | 2 | 2 | -20 |
| THIRD | 21b-19a | 2 | 2 | 0 | 0 |
| FOURTH | 21b-20b | 2 | 0 | 2 | 0 |
| FIFTH | 21b-20a | 2 | 0 | 0 | -20 |
| SIXTH | 21a-19b | 2 | 2 | 0 | 0 |
| SEVENTH | 21a-19a | 2 | 2 | 0 | 0 |
| EIGHTH | 21a-20b | 2 | 0 | 0 | 20 |
| NINTH | 21a-20a | 2 | 0 | -2 | 0 |
| TENTH | 19b-19a | 0 | 0 | -2 | 20 |
| ELEVENTH | 19b-20b | 0 | -2 | 0 | 20 |
| TWELFTH | 19b-20a | 0 | -2 | -2 | 0 |
| THIRTEENTH | 19a-20b | 0 | -2 | 2 | 0 |
| FOURTEENTH | 19a-20a | 0 | -2 | 0 | -20 |
| FIFTEENTH | 20b-20a | 0 | 0 | -2 | -20 |
| SIXTEENTH | 20a-21b | -2 | 0 | 0 | 20 |
| SEVENTEENTH | 20a-21a | -2 | 0 | 2 | 0 |
| EIGHTEENTH | 20a-19b | 0 | 2 | 2 | 0 |
| NINETEENTH | 20a-19a | 0 | 2 | 0 | 20 |
| TWENTIETH | 20a-20b | 0 | 0 | 2 | 20 |
| TWENTY-FIRST | 20b-21b | -2 | 0 | -2 | 0 |
| TWENTY-SECOND | 20b-21a | -2 | 0 | 0 | -20 |
| TWENTY-THIRD | 20b-19b | 0 | 2 | 2 | -20 |
| TWENTY-FOURTH | 29b-19a | 0 | 2 | -2 | 0 |
| TWENTY-FIFTH | 19a-21b | -2 | -2 | 0 | 0 |
| TWENTY-SIXTH | 19a-21a | -2 | -2 | 2 | -20 |
| TWENTY-SEVENTH | 19a-19b | 0 | 0 | 2 | -20 |
| TWENTY-EIGHTH | 19b-21b | -2 | -2 | -2 | 20 |
| TWENTY-NINTH | 19b-21b | -2 | -2 | 0 | 0 |
| THIRTIETH | 21a-21b | 0 | 0 | -2 | 20 |

## Claims

1. An angular velocity sensor, comprising:
a detection element, which has a sensing section arranged in a flexible body and sensing distortion of the flexible body; and
a detection circuit section, which detects an angular velocity relating to the detection element, wherein
the sensing section has a sensing electrode section made up of an upper electrode and a lower electrode with a piezoelectric body interposed therebetween, and the detection circuit section detects an angular velocity based upon angular velocity signals outputted from the sensing electrode section in accordance with the angular velocity,
the angular velocity signals include an X component signal around an X axis and a Z component signal around a Z axis in a case of defining a space by the Z axis vertical to a surface of the detection element, and the X axis and a Y axis that are orthogonal to the Z axis and orthogonal to each other, and
the detection circuit section is provided with a separation circuit that separates the X component signal and the Z component signal.

2. The angular velocity sensor according to claim 1, wherein
the detection element is provided with a plurality of arms, and also the arm is provided with a sensing electrode section, and
in the separation circuit,
the X component signal is detected based upon a sum/difference signal value of the X component signal in a combination of the sum/difference signal value of the X component signal being not 0 and a sum/difference signal value of the Z component signal being 0 in a plurality of the sensing electrode sections,
the Z component signal is detected based upon a sum/difference signal value of the Z component signal in a combination of the sum/difference signal value of the Z component signal being not 0 and a sum/difference signal value of the X component signal being 0 in a plurality of the sensing electrode sections, and
the X component signal and the Z component signal are separated.

3. The angular velocity sensor according to claim 1, wherein
the flexible body is driven and oscillated, and also the angular velocity signals include an oscillating component signal of the flexible body,
in the separation circuit,
the X component signal is detected based upon a sum/difference signal value of the X component signal in a combination of the sum/difference signal value of the X component signal being not 0 and a sum/difference signal value of the Z component signal and a sum/difference signal value of the oscillating component signal being 0 in a plurality of the sensing electrode sections,
the Z component signal is detected based upon a sum/difference signal value of the Z component signal in a combination of the sum/difference signal value of the Z component signal being not 0 and a sum/difference signal value of the X component signal and a sum/difference signal value of the oscillating component signal being 0 in a plurality of the sensing electrode sections, and
the X component signal and the Z component signal are separated.

4. The angular velocity sensor according to claim 1, wherein
the angular velocity signals include an X component signal around an X axis, a Y component signal around a Y axis, and a Z component signal around a Z axis on the Z axis, and
the detection circuit section is provided with a separation circuit that separates the X component signal, the Y component signal, and the Z component signal.

5. The angular velocity sensor according to claim 4, wherein
the detection element is provided with a plurality of arms, and also the arm is provided with a sensing electrode section,
in the separation circuit,
the X component signal is detected based upon a sum/difference signal value of the X component signal in a combination of the sum/difference signal value of the X component signal being not 0 and a sum/difference signal value of the Y component signal and a sum/difference signal value of the Z component signal being 0 in a plurality of the sensing electrode sections,
the Y component signal is detected based upon a sum/difference signal value of the Y component signal in a combination of the sum/difference signal value of the Y component signal being not 0 and a sum/difference signal value of the X component signal and a sum/difference signal value of the Z component signal being 0 in a plurality of the sensing electrode sections,
the Z component signal is detected based upon a sum/difference signal value of the Z component signal in a combination of the sum/difference signal value of the Z component signal being not 0 and a sum/difference signal value of the X component signal and a sum/difference signal value of the Y component signal being 0 in a plurality of the sensing electrode sections, and
the X component signal, the Y component signal, and the Z component signal are separated.

6. The angular velocity sensor according to claim 4, wherein
the flexible body is driven and oscillated, and also the angular velocity signals include an oscillating component signal of the flexible body,
in the separation circuit,
the X component signal is detected based upon a sum/difference signal value of the X component signal in a combination of the sum/difference signal value of the X component signal being not 0 and a sum/difference signal value of the Y component signal, a sum/difference signal value of the Z component signal and a sum/difference signal value of the oscillating component signal being 0 in a plurality of the sensing electrode sections,
the Y component signal is detected based upon a sum/difference signal value of the Y component signal in a combination of the sum/difference signal value of the Y component signal being not 0 and a sum/difference signal value of the X component signal, a sum/difference signal value of the Z component signal and a sum/difference signal value of the oscillating component signal being 0 in a plurality of the sensing electrode sections,
the Z component signal is detected based upon a sum/difference signal value of the Z component signal in a combination of the sum/difference signal value of the Z component signal being not 0 and a sum/difference signal value of the X component signal, a sum/difference signal value of the Y component signal and a sum/difference signal value of the oscillating component signal being 0 in a plurality of the sensing electrode sections, and
the X component signal, the Y component signal, and the Z component signal are separated.

7. The angular velocity sensor according to claim 1,
wherein
the detection element has a plurality of first arms and second arms which are formed as coupled in an orthogonal direction, and a supporting section that supports two of the first arms and a fixing arm that is coupled to the supporting section and also fixed to a mounting substrate, and
the second arm is provided with the sensing section.

8. The angular velocity sensor according to claim 1,
wherein the detection circuit section detects an angular velocity based upon an angular velocity signal outputted from the upper electrode of the sensing electrode section in accordance with the angular velocity, and an angular velocity signal outputted from the lower electrode of the sensing electrode section.

9. An angular velocity sensor, comprising:
a detection element, which has a sensing section arranged in a flexible body and sensing distortion of the flexible body; and
a detection circuit section, which detects an angular velocity relating to the detection element, wherein
the sensing section has a plurality of sensing electrode sections each made up of an upper electrode and a lower electrode with a piezoelectric body interposed therebetween, and
the detection circuit section selectively picks out a sum/difference signal value from angular velocity signals from the plurality of sensing electrode sections.

10. The angular velocity sensor according to claim 9, wherein two values are selectively picked out from a plurality of the sum/difference signal values, and a sum/difference signal thereof is picked out as a second-stage sum/difference signal value.

11. The angular velocity sensor according to claim 10, wherein two values are selectively picked out from a plurality of the second-stage sum/difference signal values, and a sum/difference signal value thereof is picked out as a third-stage sum/difference signal value.

12. The angular velocity sensor according to claim 9, having a plurality of the sensing electrode sections in positions symmetrical about a plane vertical to an X axis in a case of defining a space by a Z axis vertical to a surface of the detection element, and the X axis and a Y axis that are orthogonal to the Z axis and orthogonal to each other.

13. The angular velocity sensor according to claim 12, having a plurality of second arms with the sensing electrode sections located on surfaces thereof and a plurality of weight sections coupled to the second arms,
wherein the second arms and the weight sections form shapes symmetrical about the plane vertical to the X axis.

14. The angular velocity sensor according to claim 9, having a plurality of the sensing electrode sections in positions symmetrical about a plane vertical to a Y axis in a case of defining a space by a Z axis vertical to a surface of the detection element, and an X axis and the Y axis that are orthogonal to the Z axis and orthogonal to each other.

15. The angular velocity sensor according to claim 14, having a plurality of second arms with the sensing electrode sections located on surfaces thereof and a plurality of weight sections coupled to the second arms,
wherein the second arm and the weight section form shapes symmetrical about the plane vertical to the Y axis.
